# EUROPÄISCHE PATENTSCHRIFT

(11) **EP 0 861 747 B1**
(45) Veröffentlichungstag und Bekanntmachung des Hinweises auf die Patenterteilung: **17.09.2003**
(21) Anmeldenummer: 98103264.2
(22) Anmeldetag: 25.02.1998
(51) Int. Cl.: B60H 1/00

(54) **Klimaanlage für den Innenraum eines Fahrzeuges**
Air conditioning device for a motor vehicle interior
Installation de climatisation pour l'habitacle de véhicules

(30) Priorität: 01.03.1997 DE 19708442
(43) Veröffentlichungstag der Anmeldung: 02.09.1998
(73) Patentinhaber: Hella KG Hueck & Co., 59552 Lippstadt (DE)
(72) Erfinder: Hussmann, Micha, 59555 Lippstadt (DE)

(56) Entgegenhaltungen:
- DE-A- 3 808 319
- DE-A- 3 836 596
- DE-A- 4 031 050
- DE-A- 4 431 041

## Beschreibung

Die Erfindung betrifft eine Klimaanlage für den Innenraum eines Fahrzeuges und insbesondere den Automatik-Modus einer solchen Klimaanlage.

Klimaanlagen, mit denen sich der Innenraum/die Fahrgastzelle eines Fahrzeuges klimatisieren lassen, sind mit einem Außentemperatursensor zum Ermitteln der Temperatur der von außen angesaugten Luft und mit einem Innenraumtemperatursensor zum Ermitteln der Temperatur im Fahrzeug-Innenraum versehen. Die dem Innenraum zuzuführende Luft wird über ein Gebläse angesaugt und strömt durch eine Heiz/Kühlvorrichtung zum Entfeuchten und Temperieren der Luft hindurch, bevor sie in den Fahrzeug-Innenraum gelangt. Ferner sind die bekannten Klimaanlagen mit einer Umluft/Außenluft-Verstellvorrichtung versehen, die über ein Stellglied verstellbar ist. Im allgemeinen handelt es sich bei diesen Verstellvorrichtungen um Klappen. Sofern kein Regler für die Umluft/Außenluft-Verstellvorrichtung vorgesehen ist, läßt sich diese lediglich in eine von zwei Endpositionen überfuhren. In der ersten Endposition (Umluft-Position) wird Luft aus dem Fahrzeug-Innenraum angesaugt, um nach dem Durchströmen der Heiz/Kühlvorrichtung wieder dem Fahrzeug-Innenraum zugeführt zu werden. In der anderen Endposition (Außenluft-Position) saugt das Gebläse von außerhalb des Fahrzeuges Außen-(Frisch-)Luft an, um diese nach dem Durchströmen der Heiz/Kühlvorrichtung dem Innenraum zuzuführen. Schließlich sind die bekannten Klimaanlagen noch mit einer Steuereinheit versehen, die in Abhängigkeit von unter anderem der Außentemperatur, der Innenraumtemperatur und dem Sollwert für die Innenraumtemperatur die HeizHeiz/Kühlvorrichtung, die Umluft/Außenluft-Verstellvorrichtung und die Verteilung der dem Innenraum zuzuführenden Luft auf unterschiedliche Ausströmöffnungen steuert. Die Steuereinheit ist Teil einer Innenraumtemperatur-Regelung, deren Regelstrecke eine bestimmte Zeitkonstante aufweist, welche durch die einzelnen Komponenten der Klimaanlage und durch den Innenraum des Fahrzeuges bestimmt ist. Diese Zeitkonstante liegt im Minutenbereich und beträgt typischerweise ca. 1 und 3 Minuten. Damit sind die Innenraumtemperatur-Regelungen relativ träge, d. h. reagieren auf Störgrößenbeaufschlagungen und -veränderungen sowie Istwertoder Sollwert- Temperaturveränderungen relativ langsam. Die Reaktionszeit der Regelung kann verkürzt werden, indem der Innenraumtemperatur-Regelung eine Ausblastemperatur-Regelung unterlagert wird, deren Regelstrecke eine Zeitkonstante im Bereich deutlich unter einer Minute, typischerweise zwischen 10 und 30 Sekunden aufweist.

Werden die bekannten Klimaanlagen im Automatik-Modus betrieben, so kommt es je nach den Umständen zu einer Umschaltung vom Außenluft- bzw. Frischluftbetrieb auf Umluftbetrieb und umgekehrt. Ursache hierfür sind beispielsweise ein schnelles Abkühlen des Fahrzeug-Innenraums im Sommer bzw. ein schnelles Aufheizen im Winter. Weiterhin kann Auslöser für eine Umschaltung von Frischluftbetrieb auf Umluftbetrieb das Ausgangssignal eines Schadstoffsensors sein, der im Außenluft-Ansaugkanal untergebracht ist.

Jede Umschaltung von Frischluftbetrieb auf Umluftbetrieb und umgekehrt fuhrt zu einer Veränderung der von der Klimaanlage ausgehenden und sich auf den Fahrzeug-Innenraum auswirkenden Strömungsgeräusche. Die durch einen Schadstoffsensor ausgelösten Umschaltungen zwischen den beiden Betriebsarten können während der Fahrt verhältnismäßig oft erfolgen, so daß die Fahrgäste dementsprechend oft auch den Geräuschveränderungen ausgesetzt sind, was mit Komforteinbußen verbunden ist. Mit Hilfe einer Umluftregelung der Umluft/Außenluft-Verstellvorrichtung in Abhängigkeit von der aktuellen noch verfügbaren Restkapazität der Innenraumtemperatur-Regelvorrichtung, wie sie z. B. aus DE 4031 050 A1 bekannt ist, lassen sich die obigen Nachteile beim Umschalten von Umluft- auf Frischluftbetrieb in gewisser Weise kompensieren bzw. vermeiden. Allerdings erhöht sich dadurch der regelungstechnische Aufwand der Klimaanlage.

Der Erfindung liegt die Aufgabe zugrunde, eine Klimaanlage zur Klimatisierung des Innenraums eines Fahrzeuges zu schaffen, die lediglich geringen schaltungsund regelungstechnischen Aufwand erfordert und deren Betriebsbedingungen sich dennoch beim Umschalten vom Umluftbetrieb auf den Frischluftbetrieb und umgekehrt für die Insassen insbesondere akustisch kaum spürbar verändern.

Zur Lösung dieser Aufgabe wird mit der Erfindung eine Klimaanlage für den Innenraum eines Fahrzeuges mit den Merkmalen des Anspruchs 1 vorgeschlagen; einzelne Ausgestaltungen der Erfindung sind in den Unteransprüchen angegeben.

Bei der erfindungsgemäßen Klimaanlage wird auf ein Umschaltsignal der Steuereinheit hin die Umluft/ Außenluft- Verstellvorrichtung zeitgesteuert aus ihrer einen Endposition in die andere Endposition überfuhrt. Die Zeitspannen, innerhalb derer jeweils die Überführung erfolgt, liegen im Bereich der Zeitkonstante der Innenraumtemperatur-Regelstrecke. Die Innenraumtemperatur-Regelstrecke wird gebildet von dem Fahrzeug-Innenraum und dessen Einbauten, wie die Sitze, das Armaturenbrett und der Auskleidung und Beschaffenheit der Fahrgastzelle. Mit "Zeitkonstante der Innenraumtemperatur-Regelstrecke" ist im Rahmen dieser Erfindung diejenige Zeitkonstante gemeint, die die Innenraumtemperatur-Regelstrecke aufweist, wenn der Innenraum und seine Einbauten sowie die Umgebung des Kfz Raumtemperatur (20 - 25C) aufweisen und die Innentemperatur im Kopfraumbereich gemessen wird.

Nach der Erfindung ist ferner vorgesehen, daß der Innenraumtemperatur-Regelung eine Ausblastemperatur-Regelung unterlagert ist. Auch die Ausblastemperatur-Regelung ist durch eine spezifische Zeitkonstante gekennzeichnet, die sich im Bereich von einigen zig Sekunden bewegt, während die Zeitkonstante der Innenraumtemperatur-Regelung im Bereich einiger weniger Minuten liegt. Bei unterlagerter Ausblastemperatur-Regelung gilt erfindungsgemäß, daß die Umschalt-Zeitspannen für die Umluft/Außenluft-Verstellvorrichtung zwischen dem 1- und dem 20-fachen der Zeitkonstanten der Ausblastemperatur-Regelstrecke liegen. Die Ausblastemperatur-Regelstrecke wird im wesentlichen von dem Luftströmungssystem zwischen einschließlich der Heiz/Kühlvorrichtung und dem Ausblastemperatursensor gebildet. Die "Zeitkonstante" dieser Regelstrecke soll im Rahmen dieser Erfindung derjenige Wert sein, der gegeben ist, wenn das Luftströmungssystem auch eine um Raumtemperatur (20-25C) liegende Temperatur aufweist. Die obigen Vorteile der langsamen Umschaltungen von Umluft- auf Frischluftbetrieb gelten gleichsam auch, was das Verhalten der Ausblastemperatur-Regelung betrifft.

Durch die relativ langsame Umschaltung der Umluft/ Außenluft-Verstellvorrichtung zwischen der Außenluft-Position und der Umluftposition sowie umgekehrt werden die Geräuschveränderungen von den Insassen weniger stark wahrgenommen. Damit treten keine nennenswerten negativen akustischen Einflüsse auf, so daß die Insassen die Klimaanlage als komfortabel empfinden.

Nach der Erfindung ist vorgesehen, daß zumindest eine der Umschalt-Zeitspannen, insbesondere diejenige zur Umschaltung aus der Umluft-Position in die Frischluft-Position, größenordnungsmäßig im wesentlichen gleich der der Innenraumtemperatur-Regelstrecke ist. Die andere Umschalt-Zeitspanne kann durchaus außerhalb dieses Bereichs liegen. Langsame Umschaltungen wirken sich auch vorteilhaft auf das Verhalten der Innenraumtemperatur -Regelvorrichtung aus, da die Veränderungen der Betriebsparameter der Klimaanlage nicht schlagartig sondern allmählich erfolgen.

Insbesondere ist vorgesehen, daß die Umschalt-Zeitspannen etwa das 3- bis 8-fache der Zeitkonstanten der Ausblastemperatur-Regelung betragen.

In vorteilhafter Weiterbildung ist ferner vorgesehen, daß die Umschalt-Zeitspannen fest vorgegeben sind. Grundsätzlich ist es nämlich denkbar, daß die Dauer der Umschalt-Zeitspannen je nach aktuellem Betriebszustand des Fahrzeuges bzw. der Klimaanlage verändert werden. Insbesondere ist es dabei denkbar, daß die Dauer der Umschalt-Zeitspannen beispielsweise abhängig ist von der Größe der Gebläsespannung, indem sie umgekehrt proportional zur Gebläsespannung ist (vorzugsweise bis zu einem vorgebbaren Schwellwert von einigen wenigen Volt).

In vorteilhafter Weiterbildung der Erfindung kann vorgesehen sein, daß die Umschalt-Zeitspanne zwischen Umluftbetrieb und Frischluftbetrieb und die Umschalt-Zeitspanne zwischen Frischluftbetrieb und Umluftbetrieb gleich oder unterschiedlich lang sind.

Vorzugsweise erfolgt die Umschaltung von Umluftbetrieb auf Frischluftbetrieb etwa 3 bis 15 mal langsamer als die Umschaltung von Frischluftbetrieb auf Umluftbetrieb. Vorzugsweise beträgt das Verhältnis dieser beiden Umschaltzeiten 7 bis 12 und insbesondere 10. In absoluten Zahlen angegeben, sollte die Umschalt-Zeitspanne zum Überführen der Außenluft/Umluft-Verstellvorrichtung aus der Umluft-Position in die Außenluft-Position etwa 15 Sekunden bis 2 Minuten betragen, wohingegen die Umschaltung von Außenluftbetrieb in Umluftbetrieb innerhalb einer Zeitspanne von etwa 1 bis 10 Sekunden erfolgen kann.

In vorteilhafter Weiterbildung der Erfindung ist vorgesehen, daß die Ansteuerung der Umluft/Außenluft-Verstellvorrichtung in Abhängigkeit von einer Steuergröße erfolgt, die von der Steuereinheit ermittelt wird und den Wärme- bzw. Kälteenergiebedarf des Innenraums des Fahrzeuges repräsentiert. In die Berechnung dieser Steuergröße gehen insbesondere die Außentemperatur, die Ist- und Sollwerte der Innenraumtemperatur und gegebenenfalls die Sonneneinstrahlung ein.

Alternativ zur Ansteuerung der Umluft/Außenluft-Verstellvorrichtung in Abhängigkeit von der Steuergröße ist bei einer vorteilhaften Weiterbildung der Erfindung vorgesehen, die Umschaltung von Frischluftbetrieb auf Umluftbetrieb und umgekehrt in Abhängigkeit von dem Signal eines Schadstoffsensors auszulösen, der sich im Luftansaugkanal vor einem gegebenenfalls vorhandenen Filter befindet. Es ist auch möglich, die Umluft/Außenluft-Verstellvorrichtung in Abhängigkeit von sowohl der oben erwähnten Steuergröße als auch dem Ausgangssignal des Schadstoffsensors zu steuern, wobei es dann allerdings zweckmäßig ist, wenn die Ansteuerung in Abhängigkeit von dem Ausgangssignal des Schadstoffsensors Priorität gegenüber der Ansteuerung in Abhängigkeit von der Steuergröße hat.

Die Umschaltung von Frischluftbetrieb auf Umluftbetrieb als Folge eines einen Schwellwert übersteigenden Ausgangssignals des Schadstoffsensors hat den Vorteil, daß das Aktivkohlefilter, mit dem derartige Klimaanlage im Regelfall ausgestattet sind, geschont wird. Darüber hinaus ist die durch den Schadstoffsensor ausgelöste Umschaltung von Frischluft- auf Umluftbetrieb auch dann von Vorteil, wenn das Aktivkohlefilter platzbedingt nicht all zu groß ausgebildet werden kann, also eine lediglich begrenzte Filterkapazität aufweist. Die baldige Umschaltung von Frischluftbetrieb auf Umluftbetrieb entlastet also auch insoweit das Aktivkohlefilter.

Zur weiteren Reduktion des Empfindens von Lüftergeräuschveränderungen beim Umschalten der einen Betriebsart auf die andere ist gemäß einer weiteren vorteilhaften Ausgestaltung der Erfindung vorgesehen, daß die Versorgungsenergie für das Gebläse im Umluftbetrieb geringer ist als im Frischluftbetrieb. Dadurch wird das Lüftergeräusch reduziert, wenn der Umluftbetrieb gewählt ist. Bei der hier beschriebenen Weiterbildung der Erfindung erfolgt die Veränderung der Gebläsespannung insbesondere kontinuierlich nach Art einer Rampenfunktion und zeitgleich mit der Verstellung der Umluft/Außenluft-Verstellvorrichtung. Für die Verhältnisse der Zeitspannen zur Veränderung der Gebläsespannung sowie fiir die Dauer der Zeitspannen selbst gilt demzufolge das oben im Zusammenhang mit den Zeitspannen der Umschaltung von Frischluftbetrieb auf Umluftbetrieb und umgekehrt Gesagte.

Vorzugsweise wird die Gebläsespannung um etwa 1/10 bis 1/15 und insbesondere um etwa ein 1/12 der maximalen Versorgungsspannung reduziert, wenn sich die Klimaanlage im Umluftbetrieb befindet.

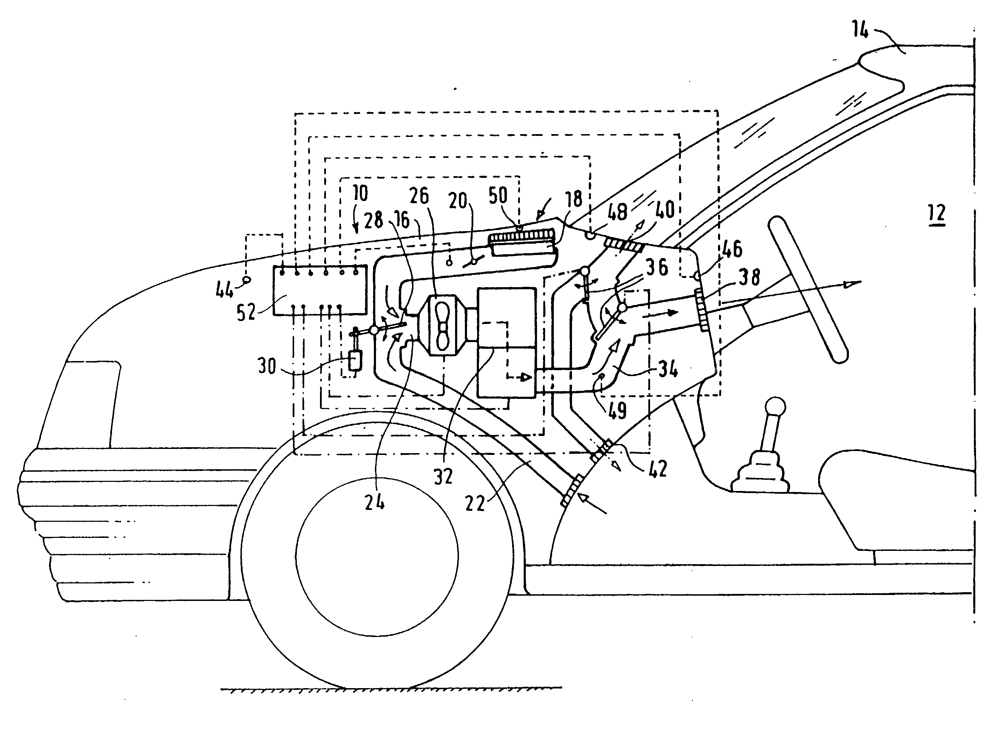

Nachfolgend wird anhand der Zeichnung ein Ausführungsbeispiel der Erfindung näher erläutert. In der Zeichnung ist schematisch in Seitenansicht der vordere Teil eines PKW mit Klimaanlage dargestellt.

Die Klimaanlage 10 zum Versorgen des Innenraums 12 des Fahrzeuges 14 weist einen Außenluft/Frischluft-Ansaugkanal -Ansaugkanal 16 auf, in dem ein Partikel- und Schadstoff-Filter 18 und eine Staudruckklappe 20 angeordnet sind. Der Frischluft-Ansaugkanal 16 mündet zusammen mit einem Umluft-Ansaugkanal 22 in den Einlaß 24 eines Gebläses 26. Der Umluft-Ansaugkanal 22 ist zum bodennahen Bereich des Innenraums 12 hin offen, so daß über diesen Umluft-Ansaugkanal 22 Luft aus dem Innenraum 12 des Fahrzeuges 14 angesaugt werden kann. Vor dem Einlaß 24 des Gebläses 26 befindet sich eine Umluft/Frischluftklappe 28, die mittels eines lagegeregelten Stellglieds 30 stufenlos zwischen einer Umluft-Position und einer Frischluft-Position verstellbar ist. In der Umluft-Position ist der Frischluft-Ansaugkanal 16 durch die Umluft/Frischluftklappe 28 abgesperrt, während in der Frischluft-Position der Umluft-Ansaugkanal 22 abgesperrt ist. Die vom Gebläse 26 angesaugte Luft wird einem luft- oder wasserseitig gesteuerten Kühl/Heizregister 32 zugeführt, von wo aus sie über ein Luftkanalsystem 34 mit Verteilerklappen 36 entweder über die Mannanströmöffnungen 38, die Defrosteröffnungen 40 oder die Fußraumausblasöffnungen 42 dem Innenraum 12 zugeführt wird.

Die Klimaanlage 10 umfaßt ferner diverse Sensoren, bei denen es sich um einen Außentemperatursensor 44, einen Innenraumtemperatursensor 46, einen Sonnensensor 48, einen Ausblastemperatursensor 49 und einen Schadstoffsensor 50 handelt. Diese Sensoren 44 bis 50 sind mit einer Steuereinheit 52 versehen, deren Ausgänge mit dem Stellglied 30 für die Umluft/Frischluftklappe 28 dem Gebläse 26, der Heiz/Kühlvorrichtung 32 und nicht dargestellten Stellgliedern für die Luftverteilklappen 36 und fiir die Staudruckklappe 20 verbunden sind.

Bei der hier beschriebenen Klimaanlage 10 steuert die Steuereinheit 52 das Stellglied 30 für die UmluftUmluft/Frischluftklappe 28 unterschiedlich an, und zwar in Abhängigkeit davon, ob die Klimaanlage 10 aus dem Frischluftbetrieb in den Umluftbetrieb oder aus dem Umluftbetrieb in den Frischluftbetrieb umgeschaltet werden soll. Im erstgenannten Fall erfolgt die Umschaltung der Umluft/Frischluftklappe 28 innerhalb einer ersten Zeitspanne, während die Zurücküberführung aus der Umluft-Position in die Frischluft-Position innerhalb einer zweiten Zeitspanne erfolgt, die größer oder kleiner als die oder gleich der ersten Zeitspanne ist. Beide Zeitspannen sind in Abhängigkeit von der Klimaanlage 10 und dem Fahrzeug zu wählen und fest eingestellt (in der Steuereinheit programmiert). Dabei gilt, daß die Zeitspannen innerhalb der Zeitkonstanten der Innenraumtemperatur-Regelstrecke bzw. des 2- bis 8-fachen der Ausblastemperatur-Regelstrecke der Klimaanlage 10 betragen. Konkret liegt die Zeitkonstante der Ausblastemperatur-Regelstrecke bei ca. 10 sek., während die Zeitkonstante der Innenraumtemperatur-Regelstrecke etwa 1 min. beträgt. Die Überführung der Umluft/Außenluft-Klappe -Klappe 28 aus der Umluft-Position in die Frischluft-Position dauert etwa 1 min, während die Umschalt-Zeitspanne zwischen der Frischluft-Position und der Umluft-Position etwa 20 sek. beträgt.

Da die Strömungsgeräusche im Umluftbetrieb lauter sind als im Außenluftbetrieb, kann man zur teilweisen Kompensation dieser akustischen Erscheinung die Gebläsespannung im Umluftbetrieb mit einer negativen Offset-Spannung von z. B. 1 Volt beaufschlagen, d. h. die Gebläsespannung wird im Umluftbetrieb gegenüber dem Frischluftbetrieb um die Offset-Spannung reduziert. Innerhalb der zuvor genannten Umschaltintervalle der Umluft/Frischluftklappe 28 wird durch die Steuereinheit 52 auch die Versorgungsspannung für das Gebläse 26 kontinuierlich um die Offset-Spannung verändert.

Aufgrund der verhältnismäßig langsam erfolgenden Verstellung der Umluft/Frischluftklappe 28 aus ihrer Umluft-Position in ihre Frischluft-Position und der gleichzeitig damit erfolgenden Anhebung der Gebläsespannung läßt sich mit der oben beschriebenen und in der Zeichnung dargestellten Klimaanlage 10 deren Geräuschverhalten beim Übergang vom Umluftbetrieb auf den Frischluftbetrieb optimieren, so daß Veränderungen des Geräuschverhaltens von den Insassen kaum wahrgenommen werden. Aufgrund der langsamen Umschaltung von Umluftbetrieb auf Frischluftbetrieb verändert sich demzufolge auch das Geräuschverhalten weniger schnell.

Der weiche, allmähliche Übergang von Umluftbetrieb auf Frischluftbetrieb führt ferner dazu, daß sich der Arbeitspunkt der Klimaanlage 10 konstant und in einer Richtung verschiebt. Damit wird ein Schwingen der Klimaanlage zwischen unterschiedlichen Betriebspunkten/-zuständen verhindert. Das wiederum steigert für die Insassen spürbar den Komfort, da sie nun nicht mehr innerhalb kürzester Zeit unterschiedlichen Betriebszuständen der Klimaanlage ausgesetzt sind. Die Komfortverbesserung ist insbesondere im Hinblick auf eine kaum noch wahrnehmbare Veränderung des Geräuschverhaltens der Klimaanlage gegeben, da sich das Geräuschverhalten der Klimaanlage 10 über eine verhältnismäßig lange Zeitspanne (Umschaltintervall von Umluft auf Frischluft) verändert. Diese Verhältnisse und Eigenschaften sowie Auswirkungen gelten auch für den Fall der Umschaltung von Frischluft- auf Umluftbetrieb.

Wie oben erwähnt, verfügt die Klimaanlage 10 über ein Schadstoff-Filter 18 und einen Schadstoffsensor 50. Das Schadstoff-Filter 18 kann Schadstoffe aus der angesaugten Außenluft bis zu einer bestimmten Konzentration herausfiltern und damit neutralisieren. Sobald der Schadstoffsensor 50 einen oberhalb eines Schwellwerts liegenden Anteil an Schadstoffen (z. B. Noₓ) in der Außenluft ermittelt, wird von Außenluft- auf Umluftbetrieb umgeschaltet. Diese Maßnahme ist insbesondere dann von Vorteil, wenn das Filter 18 z. B. wegen seiner Größe lediglich eine verhältnismäßig geringe Kapazität zur Schadstoff-Filterung aufweist. Ferner wird das Filter 18 im Umluftbetrieb geschont, da Luft nicht mehr über den Außenluftansaugkanal 16 angesaugt wird. Sobald die Schadstoffkonzentration wieder bis unterhalb des Schwellwerts abgesunken ist, wird gegebenenfalls zeitverzögert wieder auf den Frischluftbetrieb umgeschaltet. Auch die durch den Schadstoffsensor 50 ausgelöste Umschaltung von Frischluft- auf Umluftbetrieb und umgekehrt führt zu sich auf den Innenraum 12 auswirkende Veränderungen des Geräuschverhaltens der Klimaanlage 10. Werden beide Umschaltintervalle groß genug, d. h. 2- bis 20- und insbesondere 5- bis 10-mal so groß wie die Zeitkonstante der Ausblastemperatur-Regelstrecke gewählt, wie es bei der Klimaanlage 10 der Fall ist, so machen sich die Veränderungen der Geräusche der Klimaanlage 10 für die Insassen kaum bemerkbar. Der Vorteil der im Vergleich zu den Zeitkonstanten der Regelstrecken relativ langen Umschalt-Zeitspannen besteht ferner darin, daß es auch zu lediglich langsamen und damit sich auf den Innenraum kaum auswirkenden Veränderungen des Arbeitspunkts der Regler der Klimaanlage beim Umschalten kommt, der Regler sein Verhalten also kaum verändert.

### BEZUGSZEICHENLISTE

- 10: Klimaanlage
- 12: Innenraum
- 14: PKW
- 16: Frischluft-Ansaugkanal
- 18: Filter
- 20: Staudruckklappe
- 22: Umluft-Ansaugkanal
- 24: Einlaß
- 26: Gebläse
- 28: Umluft/Frischluftklappe
- 30: Stellglied für Umluft/Frischluftklappe
- 32: Heiz/Kühlvorrichtung
- 34: Kanalsystem
- 36: Verteilerklappe
- 38: Mannanströmöffnung
- 40: Defrosteröffnung
- 42: Fußraum-Ausblasöffnung
- 44: Außentemperatursensor
- 46: Innenraumtemperatursensor
- 48: Sonnensensor
- 49: Ausblastemperatursensor
- 50: Schadstoffsensor
- 52: Steuereinheit

## Patentansprüche

1. Klimaanlage für den Innenraum eines Fahrzeuges,
- mit einem Gebläse (26) zum Zuführen von Luft in den Innenraum (12) des Fahrzeuges,
- einer Heiz/Kühlvorrichtung (32) zum Temperieren der dem Innenraum (12) des Fahrzeuges zuzuführenden Luft,
- einer Umluft/Außenluft-Verstellvorrichtung (28), die in eine Umluft-Position, in welcher dem Fahrzeug-Innenraum (12) aus diesem angesaugte Luft nach dem Durchströmen der Heiz/Kühlvorrichtung (32) zugeführt wird, und in eine Außenluft-Position bewegbar ist, in welcher dem Fahrzeug-Innenraum (12) von außerhalb des Fahrzeuges angesaugte Luft nach dem Durchströmen der Heiz/Kühlvorrichtung (32) zugeführt wird,
- einer Innenraumtemperatur-Regelung, die eine Regelstrecke mit einer Zeitkonstanten aufweist, und
- einer Steuereinheit (52) zum Steuern der Umluft/Außenluft-Verstellvorrichtung (28) zwecks Überführung derselben aus der einen Position in die jeweils andere, wobei die Steuereinheit (52) die Umluft/Außenluft-Verstellvorrichtung (28) derart ansteuert, dass diese auf ein Umschaltsignal der Steuereinheit (52) hin zeitgesteuert aus der Umluft-Position in die Außenluft-Position überführbar ist,
**dadurch gekennzeichnet,**
- **daß** die Umluft/Außenluft-Verstellvorrichtung (28) von der Außenluft-Position in die Umluft-Position und/oder aus der Umluft-Position in die Außenluft-Position innerhalb von Umschalt-Zeitspannen überführbar ist, die in der Größenordnung der Zeitkonstanten der Innenraumtemperatur-Regelstrecke liegen,
- **daß** der Innenraumtemperatur-Regelung eine Ausblastemperatur-Regelung mit einer Zeitkonstanten unterlagert ist und
- **daß** die Umschalt-Zeitspannen das 1- bis 20-fache der Zeitkonstanten der Ausblastemperatur-Regelung betragen.

2. Klimaanlage nach Anspruch 1, **dadurch gekennzeichnet, daß** die Umschalt-Zeitspannen das 3- bis 8-fache der Zeitkonstanten der Ausblastemperatur-Regelstrecke betragen.

3. Klimaanlage nach Anspruch 1 oder 2, **dadurch gekennzeichnet, daß** die beiden Umschalt-Zeitspannen gleich lang sind.

4. Klimaanlage nach Anspruch 1 oder 2, **dadurch gekennzeichnet, daß** die beiden Umschalt-Zeitspannen unterschiedlich lang sind.

5. Klimaanlage nach Anspruch 4, **dadurch gekennzeichnet, daß** die Überführung der Umluft/Außenluft- Verstellvorrichtung (28) aus der Umluft-Position in die Außenluft-Position 3 bis 15 mal langsamer erfolgt als aus der Außenluft-Position in die Umluft-Position.

6. Klimaanlage nach Anspruch 4 oder 5, **dadurch gekennzeichnet, daß** die Überführung der Umluft/Außenluft- Verstellvorrichtung (28) aus der Umluft-Position in die Außenluft-Position 7 bis 12 mal, insbesondere 10 mal langsamer erfolgt als aus der Außenluft-Position in die Umluft-Position.

7. Klimaanlage nach mindestens einem der Ansprüche 1 bis 6, **dadurch gekennzeichnet, daß** die Steuereinheit (52) eine Steuergröße ermittelt, die die dem Fahrzeug-Innenraum (12) zuzuführende Wärmeenergie pro Zeiteinheit repräsentiert, und daß die Steuereinheit (52) das Umschaltsignal für die Umluft/ Außenluft- Verstellvorrichtung (28) in Abhängigkeit von dieser Steuergröße erzeugt.

8. Klimaanlage nach mindestens einem der Ansprüche 1 bis 7, **dadurch gekennzeichnet, daß** zur Ermittlung von Schadstoffen in der zugeführten Außenluft ein Schadstoffsensor (50) vorgesehen ist und daß die Steuereinheit (52) das Umschaltsignal für die Umluft/ AußenluftVerstellvorrichtung (28) in Abhängigkeit von dem Ausgangssignal des Schadstoffsensors (50) erzeugt.

9. Klimaanlage nach Anspruch 7 und 8, **dadurch gekennzeichnet, daß** die Ansteuerung der Umluft/ Außenluft- Verstellvorrichtung (28) in Abhängigkeit von dem Ausgangssignal des Schadstoffsensors (50) Priorität gegenüber der Ansteuerung der Umluft/Außenluft-Verstellvorrichtung (28) in Abhängigkeit von der Steuergröße hat.

10. Klimaanlage nach mindestens einem der Ansprüche 1 bis 9, **dadurch gekennzeichnet, daß** die Steuereinheit (52) die Versorgungsenergie für das Gebläse (26) steuert, und zwar dergestalt, daß die Gebläse-Versorgungsenergie bei die Umluft-Position einnehmender Umluft/Außenluft- Verstellvorrichtung (28) geringer ist als in dem Fall, in dem sich die Umluft/Außenluft- Verstellvorrichtung (28) in der Außenluft-Position befindet und daß die Veränderung der Gebläse-Versorgungsenergie innerhalb der gleichen Umschalt-Zeitspannen erfolgt, wie sie für die Überführung der Umluft-/Außenluft- Verstellvorrichtung (28) aus der einen Position in die andere Position vorgesehen sind.

11. Klimaanlage nach Anspruch 10, **dadurch gekennzeichnet, daß** die Reduktion der Gebläse-Versorgungsenergie etwa 1/10 bis 1/15, insbesondere 1/12 der maximalen Versorgungsenergie des Gebläses (26) beträgt.

## Claims

1. Air-conditioning system for a vehicle interior, with
- a fan (26) for supplying air to the vehicle interior (12),
- a heater/cooler unit (32) for controlling the temperature of the air to be supplied to the vehicle interior (12),
- a recirculated-air/external-air setting device (28) which is shiftable into a recirculated-air position in which the vehicle interior (12) is resupplied with air which has been drawn from the vehicle interior (12) and passed through the heater/cooler unit (32), and into an external-air position in which the vehicle interior (12) is supplied with air which has been drawn from outside the vehicle and passed through the heater/cooler unit (32),
- an interior-temperature regulation which has a controlled process with a time constant, and
- a control unit (52) for controlling the recirculated-air/external-air setting device (28) for the purpose of transferring the device from one position to the other, the control unit (52) activating the recirculated-air/external-air setting device (28) so that upon a changeover signal of the control unit (52) the device is transferable from the recirculated-air position to the external-air position under time control,
**characterized in that**
- the recirculated-air/external-air setting device (28) is transferable from the external- air position to the recirculated-air position and/or from the recirculated-air position to the extemal-air position within changeover time intervals that fall within the order of magnitude of the time constant of the interior-temperature controlled process,
- an outflow temperature regulation with a time constant is superimposed on the interior-temperature regulation and
- the changeover time intervals are equal to 1 to 20 times the time constant of the outflow temperature regulation.

2. Air-conditioning system according to Claim 1, **characterized in that** the changeover time intervals are equal to 3 to 8 times the time constant of the outflow temperature regulation.

3. Air-conditioning system according to Claim 1 or Claim 2, **characterized in that** both changeover time intervals are of the same duration.

4. Air-conditioning system according to Claim 1 or Claim 2, **characterized in that** the two changeover time intervals are of different duration.

5. Air-conditioning system according to Claim 4, **characterized in that** transfer of the recirculated-air/external-air setting device (28) is effected 3 to 15 times more slowly from the recirculated-air position to the external-air position than from the external-air position to the recirculated-air position.

6. Air-conditioning system according to Claim 4 or Claim 5, **characterized in that** transfer of the recirculated-air/external-air setting device (28) is effected 7 to 12 times, and in particular 10 times, more slowly from the recirculated-air position to the external-air position than from the extemal-air position to the recirculated-air position.

7. Air-conditioning system according to at least one of Claims 1 to 6, **characterized in that** the control unit (52) determines a control variable which represents the heat energy to be supplied to the vehicle interior (12) per unit of time, and **in that** the control unit (52) generates the changeover signal for the recirculated-air/external-air setting device (28) as a function of this control variable.

8. Air-conditioning system according to at least one of Claims 1 to 7, **characterized in that** a pollutant sensor (50) is provided for the detection of pollutants in the external air supplied and **in that** the control unit (52) generates the changeover signal for the recirculated-air/external-air setting device (28) as a function of the output signal of the pollutant sensor (50).

9. Air-conditioning system according to Claims 7 and 8, **characterized in that** activation of the recirculated-air/external-air setting device (28) as a function of the output signal of the pollutant sensor (50) has priority over activation of the recirculated-air/external-air setting device (28) as a function of the control variable.

10. Air-conditioning system according to at least one of Claims 1 to 9, **characterized in that** the control unit (52) controls the power supply to the fan (26) in such a way that the power supplied to the fan is less when the recirculated-air/external-air setting device (28) occupies the recirculated-air position than in the case where the recirculated-air/external-air setting device (28) is in the external-air position, and **in that** the change in the power supplied to the fan is effected within the same changeover time intervals as those set for transfer of the recirculated-air/external-air setting device (28) from one position to the other.

11. Air-conditioning system according to Claim 10, **characterized in that** the reduction in the power supply to the fan is approximately 1/10 to 1/15, and in particular 1/12, of the maximum power supply to the fan (26).

## Revendications

1. Installation de climatisation pour l'habitacle d'un véhicule, comportant
- un ventilateur (26) pour amener de l'air jusque dans l'habitacle (12) du véhicule,
- un dispositif de chauffage/refroidissement (32) pour tempérer l'air à amener à l'habitacle (12) du véhicule,
- un dispositif de commutation air recyclé/air extérieur (28) qui peut être déplacé jusque dans une position d'air recyclé dans lequel de l'air aspiré hors de l'habitacle (12) du véhicule est amené à celui-ci après s'être écoulé à travers le dispositif de chauffage/refroidissement (32), et jusque dans une position d'air extérieur dans lequel de l'air aspiré depuis l'extérieur est amené à l'habitacle (12) du véhicule après s'être écoulé à travers le dispositif de chauffage/refroidissement (32),
- une régulation de température d'habitacle qui présente un système asservi avec une constante de temps, et
- une unité de commande (52) pour commander le dispositif de commutation air recyclé/air extérieur (28) dans le but de le faire passer depuis une position dans l'autre, l'unité de commande (52) pilotant le dispositif de commutation air recyclé/air extérieur (28) de telle sorte que celui-ci, commandé dans le temps sur un signal de commutation de l'unité de commande (52), peut passer depuis la position d'air recyclé jusque dans la position d'air extérieur,
**caractérisée en ce que**
le dispositif de commutation air recyclé/air extérieur (28) peut passer depuis la position d'air extérieur jusque dans la position d'air recyclé et/ou depuis la position d'air recyclé jusque dans la position d'air extérieur dans des laps de temps de commutation qui sont de l'ordre de grandeur des constantes de temps du système asservi de la température d'habitacle,
**en ce qu'**une régulation de température de soufflage est sous-jacente à la régulation de la température d'habitacle avec une constante de temps, et **en ce que** les laps de temps de commutation sont de une à vingt fois supérieurs aux constantes de temps de la régulation de température de soufflage.

2. Installation de climatisation selon la revendication 1, **caractérisée en ce que** les laps de temps de commutation sont de trois à huit fois supérieurs aux constantes de temps de du système asservi de température de soufflage.

3. Installation de climatisation selon l'une ou l'autre des revendications 1 et 2, **caractérisée en ce que** les deux laps de temps de commutation sont de même longueur.

4. Installation de climatisation selon l'une ou l'autre des revendications 1 et 2, **caractérisée en ce que** les deux laps de temps de commutation sont de longueurs différentes.

5. Installation de climatisation selon la revendication 4, **caractérisée en ce que** le passage du dispositif de commutation air recyclé/air extérieur (28) depuis la position d'air recyclé jusque dans la position d'air extérieur a lieu de trois à quinze fois plus lentement que depuis la position d'air extérieur jusque dans la position d'air recyclé.

6. Installation de climatisation selon l'une ou l'autre des revendications 4 et 5, **caractérisée en ce que** le passage du dispositif de commutation air recyclé/air extérieur (28) depuis la position d'air recyclé jusque dans la position d'air extérieur a lieu de sept à douze fois, en particulier dix fois plus lentement que depuis la position d'air extérieur jusque dans la position d'air recyclé.

7. Installation de climatisation selon au moins l'une des revendications 1 à 6, **caractérisée en ce que** l'unité de commande (52) détermine une variable de commande qui est représentative de l'énergie calorifique à amener à l'habitacle (12) du véhicule par unité de temps, et **en ce que** l'unité de commande (52) engendre le signal de commutation pour le dispositif de commutation air recyclé/air extérieur (28) en fonction de cette variable de commande.

8. Installation de climatisation selon au moins l'une des revendications 1 à 7, **caractérisée en ce que** pour déterminer les substances nocives contenues dans l'air extérieur amené, il est prévu un capteur de substances nocives (50) et **en ce que** l'unité de commande (52) engendre le signal de commutation pour le dispositif de commutation air recyclé/air extérieur (28) en fonction du signal de sortie du capteur de substances nocives (50).

9. Installation de climatisation selon la revendication 7 et la revendication 8, **caractérisée en ce que** le pilotage du dispositif de commutation air recyclé/air extérieur (28) en fonction du signal de sortie du capteur de substances nocives (52) a priorité par rapport au pilotage du dispositif de commutation air recyclé/air extérieur (28) en fonction de la variable de commande.

10. Installation de climatisation selon Tune des revendications 1 à 9, **caractérisée en ce que** l'unité de commande (52) commande l'énergie d'alimentation pour le ventilateur (26), et ceci de telle sorte que l'énergie d'alimentation du ventilateur, dans le cas où le dispositif de commutation air recyclé/air extérieur (28) occupe la position d'air recyclé, est plus faible que dans le cas où le dispositif de commutation air recyclé/air extérieur (28) se trouve dans la position d'air extérieur, et **en ce que** la variation de l'énergie d'alimentation du ventilateur a lieu dans les mêmes laps de temps de commutation que ceux qui sont prévus pour le passage du dispositif de commutation air recyclé/air extérieur (28) depuis une des positions dans l'autre position.

11. Installation de climatisation selon la revendication 10, **caractérisée en ce que** la réduction de l'énergie d'alimentation du ventilateur est approximativement de un dixième à un quinzième, en particulier un douzième de l'énergie maximale d'alimentation du ventilateur (26).
